# FASCICULE DE BREVET EUROPEEN

(11) **EP 3 137 319 B1**
(45) Date de publication et mention de la délivrance du brevet: **18.07.2018**
(21) Numéro de dépôt: 15709961.5
(22) Date de dépôt: 17.03.2015
(51) Int. Cl.: B60C 15/02

(54) **ENSEMBLE ROULANT COMPRENANT UN PNEUMATIQUE, UNE JANTE ET UN ADAPTATEUR**
ROLLANORDNUNG MIT EINEM REIFEN, EINER FELGE UND EINEM ADAPTER
ROLLING ASSEMBLY COMPRISING A TYRE, A RIM AND AN ADAPTER

(30) Priorité: 29.04.2014 FR 1453853
(43) Date de publication de la demande: 08.03.2017
(73) Titulaire: Compagnie Générale des Etablissements Michelin, 63000 Clermont-Ferrand (FR)
(72) Inventeur: DAVAL, Bertrand, F-63040 Clermont-Ferrand Cedex 9 (FR)
(74) Mandataire: Cohen, Sylvia
(86) Numéro de dépôt international: PCT/EP2015/055503
(87) Numéro de publication internationale: WO 2015/165638

(56) Documents cités:
- WO-A1-00/78565

## Description

L'invention concerne un ensemble roulant formé principalement d'un pneumatique et d'une jante.

Un ensemble roulant connu est décrit dans le document WO-A-0078565.

On rappelle ci-après les définitions utilisées dans la présente invention :
- « direction axiale » : direction parallèle à l'axe de rotation du pneumatique,
- « direction radiale » : direction coupant l'axe de rotation du pneumatique et perpendiculaire à celui-ci,
- « direction circonférentielle » : direction perpendiculaire à un rayon et comprise dans un plan perpendiculaire à l'axe de rotation du pneumatique,
- « coupe radiale » : coupe selon un plan qui contient l'axe de rotation du pneumatique,
- « plan équatorial » : plan perpendiculaire à l'axe de rotation et qui passe par le milieu de la bande de roulement

Dans le souci de diminuer les émissions de gaz carbonique des véhicules automobiles, les constructeurs souhaitent diminuer la masse de ces véhicules mais également la résistance au roulement de leurs pneumatiques. La réduction de cette résistance au roulement peut s'effectuer en augmentant le diamètre extérieur des pneumatiques et par conséquent celui des roues.

Mais ceci entraîne une augmentation de la masse de la roue et par conséquent celle du véhicule.

Aussi une solution connue consiste à utiliser des matériaux plus légers que l'acier pour constituer la jante, tels que des alliages d'aluminium. Mais de telles jantes, si elles sont plus légères et présentent un aspect visuel plus aéré facilitant ainsi le dégagement de la chaleur issue des freins, ne sont pas suffisamment résistantes à des chocs, tels que nids de poule et/ou chocs trottoirs.

En effet, les chocs occasionnés sur de tels éléments roulant peuvent entraîner la rupture d'un ou plusieurs des constituants de l'élément roulant (pneumatique et/ou jante).

Aussi il subsiste le besoin de disposer d'un ensemble roulant plus léger que les ensembles roulant dont la jante est en acier, et qui présente une meilleure résistance aux chocs du fait d'une meilleure protection du pneumatique, tout en maintenant à un haut niveau les performances de tenue de route du pneumatique, en particulier son aptitude à développer d'importantes poussées de dérive.

L'invention a donc pour objet un ensemble roulant ayant un axe de rotation et comprenant un pneumatique ayant deux bourrelets, une jante, un adaptateur assurant la jonction entre l'un des bourrelets et la jante, ladite jante ayant deux sièges de jante, ledit adaptateur ayant :
- une extrémité axialement intérieure destinée à être monté sur le siège de la jante et comprenant un élément de renfort intérieur,
- une extrémité axialement extérieure comprenant un élément de renfort extérieur,
- un corps connectant ladite extrémité extérieure avec ladite extrémité intérieure de manière à former une pièce unitaire et comprenant au moins une armature de renforcement principale assurant la liaison entre ledit renfort extérieur et ledit renfort intérieur,
- un siège d'adaptateur sensiblement cylindrique destiné à recevoir l'un desdits bourrelets, ledit siège étant situé à l'extrémité axialement extérieure dudit corps,
- une face d'appui d'adaptateur sensiblement comprise dans un plan perpendiculaire à l'axe de rotation, ladite face d'appui étant située sur la face axialement intérieure de l'extrémité axialement extérieure,

L'adaptateur se caractérise en ce que l'élément de renfort de l'extrémité axialement extérieure est en totalité située axialement à l'extérieur de la face d'appui, en ce que le corps comprend en regard du siège d'adaptateur un renfort annulaire de siège, et en ce que la jante est constituée en un matériau choisi parmi les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales ou parmi toutes les combinaisons de ces matériaux.

Le renfort annulaire de siège et l'élément de renfort de l'extrémité axialement extérieure sont distincts l'un de l'autre.

L'extrémité axialement extérieure de l'adaptateur délimite, axialement, un « logement destiné à recevoir le bourrelet du pneumatique ». La face d'appui de l'extrémité axialement extérieure sert d'appui, dans le sens axial, au bourrelet du pneumatique à l'instar d'un crochet de jante.

Ainsi le logement reçoit le bourrelet du pneumatique tout comme le fait classiquement le siège d'une jante. Le pneumatique est alors immobilisé axialement par la pression de gonflage, et est plaqué contre la face d'appui de cette extrémité axialement extérieure, à l'instar de ce qui est fait classiquement pour le bourrelet d'un pneumatique contre le crochet de jante d'une jante.

L'extrémité axialement intérieure de l'adaptateur pourrait être dénommée « bourrelet d'adaptateur » puisqu'elle est destinée à accrocher l'adaptateur sur le crochet de jante d'une jante à l'instar de ce qui est fait classiquement par le bourrelet d'un pneumatique.

Ainsi, en fonctionnement de l'ensemble roulant selon l'invention et aux sollicitations de service pour lesquelles il est conçu, le pneumatique est immobilisé axialement par rapport à la jante, plus précisément les bourrelets du pneumatique sont immobilisés axialement par rapport à la jante de la même façon que pour un ensemble roulant classique dans lequel les bourrelets du pneumatique sont montés directement sur les sièges d'une jante, alors que les bourrelets du pneumatique ne sont pas immobilisés radialement par rapport à la jante, plus précisément les bourrelets du pneumatique sont capables d'un degré de déplacement radialement par rapport à la jante. En roulage standard, on peut dire qu'il n'y a quasiment pas de déformation axiale de l'adaptateur, ou alors elle est négligeable par rapport à la déformation radiale.

En revanche, lors d'un choc, la déformation axiale de l'adaptateur peut être importante, contribuant ainsi à réduire les contraintes sur l'ensemble monté.

L'ensemble selon l'invention présente l'avantage d'être de constitution et de montage simples. L'adaptateur de l'ensemble selon l'invention permet par ailleurs, de par l'augmentation du serrage sous les bourrelets du pneumatique, d'empêcher sa rotation sur l'adaptateur en forte sollicitation latérale.

Enfin l'adaptateur de l'ensemble selon l'invention présente l'avantage de diminuer de manière significative le niveau des efforts mécaniques vers le châssis lors d'un choc, et de permettre ainsi de diminuer la masse du véhicule.

De préférence, les matériaux composites à base de fibres comprennent des fibres ayant une longueur supérieure ou égale à 5mm.

La matrice à base de composés thermodurcissables est choisie parmi les résines époxy, le vinylester, les polyesters insaturés, le cyanate ester, le bismaléimide, les résines acryliques, les résines phénoliques, les polyuréthanes et leur combinaison.

La matrice à base de composés thermoplastiques est choisie parmi le polypropylène (PP), le polyéthylène (PE), les polyamides (PA), les polyamides semi-aromatiques, le polyester (PET), le polytéréphtalate de butylène (PBT), le polyétheréthercétone (PEEK), le polyéthercétonecétone (PEKK), le polyéthersulfone (PSU), le polyétherimide (PEI), le polyimide (PI), le polyamideimide (PAI), le polyphénylénesulfide (PPS), le polyoxyméthylène (POM), le polyoxyde de phénylène (PPO).

De préférence, l'élément de renfort de l'extrémité axialement extérieur est disposé radialement à l'extérieur de la face d'appui. Le corps comprend de préférence en regard du siège d'adaptateur un renfort annulaire de siège.

De préférence, le renfort annulaire de siège présente un module de compression supérieure ou égale à 1GPa, préférentiellement supérieur à 4GPa, et plus préférentiellement supérieur à 10GPa. Le renfort annulaire peut être constitué d'une âme entourée d'un élastomère, ou d'une succession de couches de composés élastomères et de renforts métalliques et/ou textiles disposés selon toutes les combinaisons possibles. L'âme peut comprendre au moins un élément choisi parmi un métal, un matériau composite, un composé thermoplastique et leur mélange. Le matériau composite put être réalisé à base de fibres de verre noyées dans une matrice de résine.

Parmi les élastomères pouvant être utilisés dans le composé complexe et dans le renfort annulaire de siège, on liste, en premier lieu, les caoutchoucs réticulables par des réactions chimiques de vulcanisation par des ponts soufre, par des liaisons carbone-carbone créées par l'action de peroxydes ou de rayonnements ionisants, par d'autres chaînes d'atomes spécifiques de la molécule de l'élastomère, en second lieu, les élastomères thermoplastiques (TPE) où la partie déformable élastiquement forment un réseau entre des régions « dures » peu déformables dont la cohésion est le fruit de liaisons physiques (cristallites ou régions amorphes au-dessus de leur température de transition vitreuse), ensuite les élastomères non thermoplastiques et enfin les résines thermodurcissables.

Le renfort annulaire de siège peut être constitué d'au moins deux couches de constituants différents disposés successivement et en alternance. Par disposition en alternance, on définit une disposition successive d'une première puis d'une seconde couches, plusieurs fois.

Le renfort annulaire de siège peut avoir une longueur axiale totale supérieure ou égale à 30% de la largeur du bourrelet du pneumatique, et inférieure à 150% de cette même largeur, et plus préférentiellement comprise entre 40 et 110% de la largeur du bourrelet du pneumatique.

Le renfort annulaire de siège peut avoir une épaisseur radiale moyenne supérieure ou égale à 0,3mm et inférieure ou égale à 20mm en fonction de la dimension et de l'utilisation du pneumatique. Ainsi pour un pneumatique tourisme, l'épaisseur est de préférence comprise entre 0,5 et 10mm.

Le renfort annulaire de siège comprend de préférence au moins un élément choisi parmi un métal, un matériau composite, un composé thermoplastique, et leur mélange. Cet âme ou ce multicouche est de préférence compris entre deux couches d'une matrice comprenant au choix un élastomère tel que cité ci-dessus, une résine ou leurs mélanges.

Le renfort annulaire de siège est de préférence constitué d'un empilage de différentes couches de composés élastomères de nature chimique identique ou différente.

Lorsqu'il est sous forme d'un empilage de couches, le renfort a de préférence une longueur axiale supérieure à 5mm et inférieure à 25mm, et une épaisseur radiale supérieure ou égale à 0,1mm et inférieure ou égale à 4mm.

Chaque élément unitaire constituant l'empilage du renfort peut avoir une largeur axiale supérieure à 1mm et inférieure à 25mm, et une épaisseur radiale, identique ou différente, supérieure ou égale à 0,1mm et inférieure ou égale à 2mm.

Le renfort annulaire de siège peut encore se présenter sous la forme d'un empilage de fils unitaires entre une couche d'une matrice comprenant au choix un élastomère, un composé thermoplastique, une résine ou leurs mélanges. Les fils unitaires peuvent être des fils classiquement utilisés, tels que textiles (polyester, nylon, PET, aramide, rayonne, fibres naturelles (coton, lin chanvre)), métalliques, composites (carbone, verre-résine) ou les mélanges de ces constituants.

Le renfort annulaire de siège peut encore se présenter sous la forme d'une ou plusieurs nappes, dont les renforts sont disposés avec un angle compris entre 0 et 90° avec la direction circonférentielle du pneumatique.

De préférence, le renfort annulaire peut être disposé radialement à l'extérieur ou radialement à l'intérieur du corps de l'adaptateur, de part et d'autre dudit corps, ou bien encore, entre les nappes d'éléments de renforcement du corps de l'adaptateur.

L'élément de renfort extérieur peut être constitué en métal (acier), nylon, PET, aramide. Il peut comprendre une matrice en résine et/ou fibres de renforcement, telle que rayonne, aramide, PET, nylon, fibre de verre, fibre de carbone, fibre de basalte, poly(éthylène2,6 naphtalate) (PEN), polyvinyl alcool (PVA).

L'armature de renforcement principal dudit corps peut présenter un module supérieur ou égal à 4GPa ; il peut être constitué en métal (acier) en câble textile (rayonne, aramide, PET, nylon, fibre de de verre, fibre de carbone, fibre de basalte, poly(éthylène2,6 naphtalate) (PEN), polyvinyl alcool (PVA).

De préférence, l'adaptateur peut être disposé d'un seul côté de la jante, et préférentiellement du côté extérieur du véhicule. Dans ce cas, la jante possède une forme géométrique dissymétrique de manière à s'adapter à la présence de l'adaptateur présent sur un seul côté.

Lorsque l'ensemble monté comprend deux adaptateurs, ces derniers peuvent être symétriques ou non symétriques. La notion de symétrie ou de dissymétrie de l'adaptateur est définie par la longueur axiale du corps de l'adaptateur. Deux adaptateurs sont dissymétriques lorsque le corps de l'un d'entre eux a une longueur axiale plus grande que celle de l'autre.

De préférence, l'ensemble roulant selon l'invention, comprend un premier et un second adaptateur ayant chacun un corps de longueur différente ou identique.

L'adaptateur comprend au moins une bande conductrice, amovible ou non, disposée sur la totalité ou sur une partie du pourtour circonférentielle dudit adaptateur, et sur un trajet complet allant de la face d'appui d'adaptateur à la jante J. La présence de la bande conductrice permet en outre d'assurer la conduction de l'électricité entre le sol et la roue, et donc entre le sol et le véhicule notamment lorsque la conductivité des compositions élastomères n'est pas suffisante, et ceci d'autant plus que le pneumatique ne repose pas directement sur la roue mais sur un adaptateur.

De préférence, lorsque la bande conductrice est amovible ou non amovible, elle est disposée entièrement à la surface radialement externe au corps.

De préférence, lorsque la bande conductrice est non amovible, elle est partiellement enfouie sous la surface radialement externe du corps.

De préférence, la bande conductrice présente une résistivité électrique inférieure ou égale à 10⁸ Ohm.cm, et de préférence inférieure ou égale à 10⁷ Ohm.cm.

De préférence, la bande conductrice est constituée au choix en une lame métallique ou en une composition élastomère comprenant du noir de carbone en une quantité supérieure ou égale à 15%.

De préférence, le noir de carbone de la composition élastomère présente une surface spécifique supérieure ou égale à 500m²/g.

De préférence, lorsque la bande conductrice est non amovible, elle est collée ou réticulée à la composition élastomère du corps.

L'invention va maintenant être décrite à l'aide des exemples et des figures qui suivent et qui sont donnés uniquement à titre d'illustration, et dans lesquels :
- la figure 1 représente de manière schématique et en coupe radiale un ensemble roulant selon l'invention comprenant un pneumatique monté sur deux adaptateurs, eux-mêmes encastrés sur une jante de manière démontable ; et
- la figure 2 représente une vue schématique en coupe radiale d'un adaptateur non monté, selon l'invention.

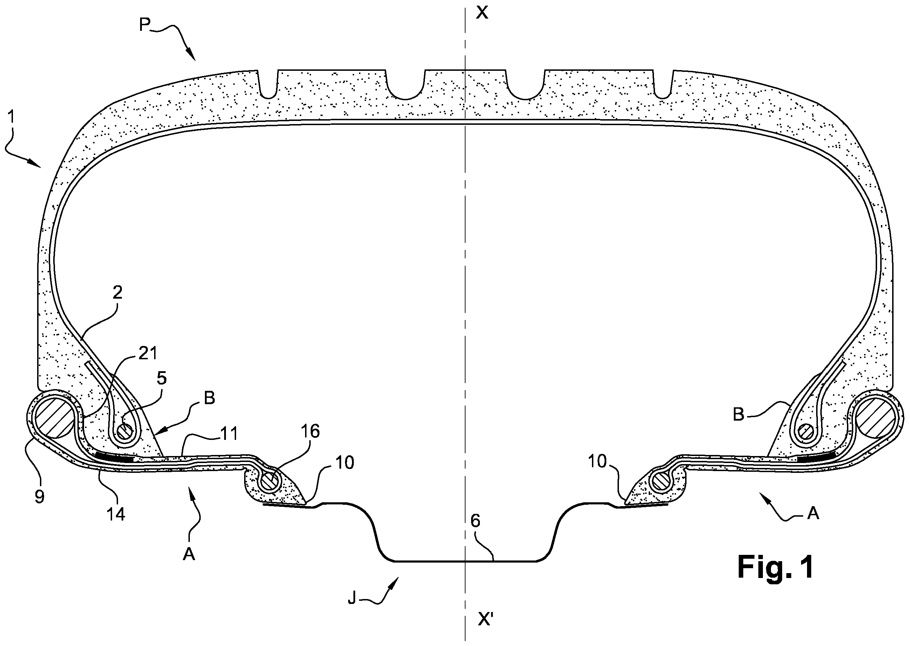

La figure 1 représente un ensemble roulant qui comprend un pneumatique P (partiellement représenté), un adaptateur A et une jante J.

Le pneumatique de conception en soi inchangée dans l'invention, est formé d'une bande de roulement renforcée par une armature de sommet réunie à deux bourrelets B de part et d'autre d'un plan équatorial XX' par l'intermédiaire de deux flancs 1. Une armature de carcasse 2 renforçant principalement les flancs 1 est ancrée dans chaque bourrelet B à au moins une tringle, ici de type « tressée » 3 pour former des retournements 4, séparés de la partie principale d'armature de carcasse par des profilés de forme quasi-triangulaire 5.

Il est important de noter que l'invention peut être mise en oeuvre avec de très nombreux types de pneumatiques, qu'ils soient à carcasse radiale ou diagonale, voire même avec des pneumatiques de type à flancs autoporteurs.

La jante J constituée en composite carbone/époxy comprend une gorge 6, dite de montage, et réunissant de part et d'autre du plan équatorial, deux sièges de jante 7 axialement prolongés par des crochets de jante 8 dont les bords radialement extérieurs sont recourbés.

L'adaptateur A comprend principalement une extrémité axialement extérieure 9, une extrémité axialement intérieure 10 et un corps 11 connectant ladite extrémité 9 à ladite extrémité 10.

L'extrémité axialement extérieure 9 comprend un élément de renfort extérieur constitué d'une première portion reliée à une seconde portion et formant un angle sensiblement perpendiculaire entre elles. Lors du montage du pneumatique, le siège de bourrelet du bourrelet B s'encastre dans l'espace créée par cet élément de renfort extérieur.

Les adaptateurs de cette figure 1 sont démontables par rapport à la jante J et aux bourrelets B du pneumatique.

L'adaptateur A, disposé au niveau de chaque bourrelet B du pneumatique peut être symétrique ou non symétrique. Par symétrie, on définit que la longueur totale du corps 11 est identique sur les deux adaptateurs. Lorsque l'ensemble (pneumatique, jante et adaptateur) est monté, les bourrelets B du pneumatique sont disposés sur le siège d'adaptateur 14 et mis en appui axial contre une face d'appui 21.

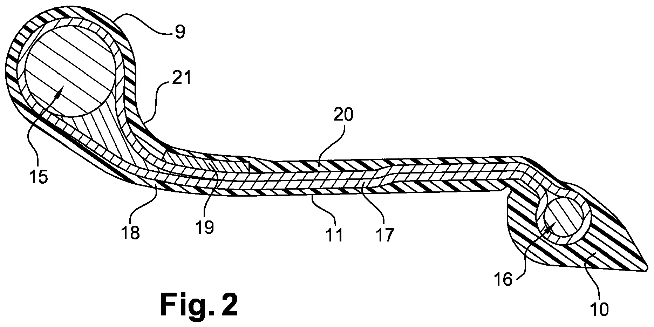

La figure 2 représente un adaptateur selon l'invention, non monté sur jante. Cet adaptateur comprend, d'une part, une extrémité axialement extérieur 9 avec un renfort extérieur 15, de forme géométrique sensiblement sphérique, en coupe, constitué en matériau composite tel que du verre-résine, d'autre part, une extrémité axialement intérieur 10 avec un renfort métallique 16, et enfin un corps 11 constitué de deux nappes 17 comprenant des câbles textiles. Les câbles de chaque nappe sont parallèles entre eux. Lesdites nappes 17 sont, d'une part, accolée axialement à l'intérieur et radialement à l'extérieur aux parois du renfort 15, et d'autre part, ancrée dans l'extrémité 10 au renfort métallique 16, tel qu'une tringle formant un retournement à chaque extrémité.

Le corps 11 comprend un siège d'adaptateur 18 sensiblement cylindrique destiné à recevoir un bourrelet du pneumatique (voir figure 2) disposé à l'extrémité axialement extérieure du corps 11.

Le corps 11 comprend également une face d'appui 21 d'adaptateur sensiblement comprise dans un plan perpendiculaire à l'axe de rotation, située sur la face axialement intérieure de l'extrémité axialement extérieure, et destiné à maintenir en place le bourrelet dans son logement. Ce siège d'adaptateur 18 comprend un renfort annulaire de siège 19 ayant un module de compression égal à 100GPa. Selon la représentation de cette figure 2, la totalité du renfort 19 est disposée à la surface radialement extérieure de la surface du corps 11.

Le renfort annulaire de siège 19 n'est pas solidaire du renfort extérieur 15. Ces deux renforts 19, 15 sont totalement indépendants l'un de l'autre.

Le renfort 19 est constitué d'un tricouche comprenant des renforts métalliques sous forme de fils, alternés avec un élastomère de type caoutchouc-résine. Le renfort 19 a une épaisseur radiale d'environ 1,5mm et une longueur axiale d'environ 15mm.

La couche d'élastomère du renfort 19 a une épaisseur radiale d'environ 0,3mm et une longueur axiale d'environ 15mm.

Une couche d'élastomère 20 recouvre l'ensemble des éléments constituant l'adaptateur, à savoir le renfort 15, le renfort 16, le corps 11 et, la surface radialement extérieure du renfort 19.

Les exemples qui suivent montrent les résultats obtenus avec l'adaptateur selon l'invention.

### Exemple : Essais sur choc trottoir

Cet essai consiste à faire monter un ensemble monté sur un trottoir selon un angle d'attaque de 30°. Le choix de cet angle est basé sur le fait qu'il constitue une sollicitation très pénalisante pour un pneumatique. L'essai s'effectue avec deux hauteurs de trottoir différentes (90mm et 110mm).Le test se déroule de la manière suivante. On effectue plusieurs passages de la roue à des vitesses différentes jusqu'à obtenir la crevaison du pneumatique. La vitesse de départ est de 20km/h, puis on incrémente la vitesse de 5km/h à chaque nouveau passage.

On compare un ensemble classique sans adaptateur et avec une jante en acier classique (témoin 1) à un ensemble muni d'un adaptateur selon le document WO00/78565 (témoin 2), et à un ensemble muni d'un adaptateur et d'une jante en composite selon l'invention (invention). Ces ensembles sont tous de dimension 205/55R16 comprenant une jante 6.5J16. Les résultats sont rassemblés dans le tableau I suivant et sont donnés en pourcentage :

**Tableau I**

| | **Témoin 1** | **Témoin 2** | **Invention** |
|---|---|---|---|
| **Pourcentage de la vitesse de crevaison par rapport au témoin - hauteur trottoir 90mm** | 100 | >150 | >150 |
| **Niveau d'effort de portée verticale (Fz) relévée à la vitesse de crevaison** | 100 | 50 | 40 |
| **Etat de l'ensemble monté suite aux chocs** | -crevaison du pneu | -Pneu et roue intacts | Pneu, adaptateur et roue intacts |
| | - roue comprenant des marques | -Adaptateur déformé plastiquement | |

Les résultats supérieurs à 100 montrent une amélioration du comportement face à un choc latéral.

L'essai réalisé sur la hauteur de trottoir de 90mm aboutit à la crevaison du pneumatique témoin à une vitesse de 30km/h, alors que l'ensemble selon l'invention ne subit aucun dommage à cette même vitesse, voire à une vitesse de 50km/h.

L'essai réalisé sur la hauteur de trottoir de 110mm aboutit à la crevaison du pneumatique témoin à une vitesse de 20km/h, alors que l'ensemble selon l'invention ne subit aucun dommage à cette même vitesse, voire à une vitesse de 50km/h.

## Revendications

1. Ensemble roulant ayant un axe de rotation et comprenant :
- un pneumatique ayant deux bourrelets (B),
- une jante (J),
- un adaptateur assurant la jonction entre l'un des bourrelets et la jante ladite jante ayant deux sièges de jante,
ledit adaptateur ayant :
- une extrémité axialement intérieure (10) destinée à être monté sur le siège de la jante et comprenant un élément de renfort intérieur (16),
- une extrémité axialement extérieure (9) comprenant un élément de renfort extérieur (15),
- un corps (11) connectant ladite extrémité extérieure avec ladite extrémité intérieure de manière à former une pièce unitaire et comprenant au moins une armature de renforcement principale assurant la liaison entre ledit renfort extérieur et ledit renfort intérieur,
- un siège d'adaptateur (18) sensiblement cylindrique destiné à recevoir l'un desdits bourrelets, ledit siège étant situé à l'extrémité axialement extérieure dudit corps,
- une face d'appui (21) d'adaptateur sensiblement comprise dans un plan perpendiculaire à l'axe de rotation, ladite face d'appui étant située sur la face axialement intérieure de l'extrémité axialement extérieure,
**caractérisé en ce que** l'élément de renfort (15) de l'extrémité axialement extérieure (9) est en totalité située axialement à l'extérieur de la face d'appui (21), **en ce que** le corps (11) comprend en regard du siège d'adaptateur(18) un renfort annulaire de siège (19), **et en ce que** la jante est constituée en un matériau choisi parmi les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales, ou parmi toutes les combinaisons de ces matériaux.

2. Ensemble roulant selon la revendication 1, **caractérisé en ce que** les matériaux composites à base de fibres comprennent des fibres ayant une longueur supérieure ou égal à 5mm.

3. Ensemble roulant selon la revendication 1, **caractérisé en ce que** la matrice à base de composés thermodurcissables est choisie parmi les résines époxy, le vinylester, les polyesters insaturés, le cyanate ester, le bismaléimide, les résines acryliques, les résines phénoliques, les polyuréthanes et leur combinaison.

4. Ensemble roulant selon la revendication 1, **caractérisé en ce que** la matrice à base de composés thermoplastiques est choisie parmi le polypropylène (PP), le polyéthylène (PE), les polyamides (PA), les polyamides semi-aromatiques, le polyester (PET), le polytéréphtalate de butylène (PBT), le polyétheréthercétone (PEEK), le polyéthercétonecétone (PEKK), le polyéthersulfone (PSU), le polyétherimide (PEI), le polyimide (PI), le polyamideimide (PAI), le polyphénylénesulfide (PPS), le polyoxyméthylène (POM), le polyoxyde de phénylène (PPO).

5. Ensemble roulant selon la revendication 1, **caractérisé en ce que** l'élément de renfort (15) de l'extrémité axialement extérieur (9) est disposé radialement à l'extérieur du siège d'adaptateur (18).

6. Ensemble roulant selon la revendication 1, **caractérisé en ce que** le renfort annulaire de siège (19) présente un module de compression supérieur ou égale à 1GPa, et de préférence supérieure à 4GPa, et plus préférentiellement supérieur à 10GPa.

7. Ensemble roulant selon la revendication 1, **caractérisé en ce que** le renfort annulaire de siège (19) est constitué d'une âme entourée d'un élastomère.

8. Ensemble roulant selon l'une des revendications 1 ou 7, **caractérisé en ce que** l'élastomère est choisi parmi les caoutchoucs réticulables, les élastomères thermoplastiques, les élastomères non thermoplastiques.

9. Ensemble roulant selon la revendication 7, **caractérisé en ce que** l'âme comprend au moins un élément choisi parmi un métal, un matériau composite, un composé thermoplastique, et leur mélange.

10. Ensemble roulant selon l'une des revendications 1, 6 ou 7, **caractérisé en ce que** le renfort annulaire (19) de siège est constitué d'au moins deux couches de constituants différents disposées en alternance.

11. Ensemble roulant selon la revendication 1, **caractérisé en ce que** le matériau composite est réalisé à base de fibres de verre noyées dans un matériau résine.

12. Ensemble roulant selon la revendication 1, **caractérisé en ce que** le renfort annulaire de siège (19) a une longueur axiale totale supérieure ou égal à 30% de la largeur du bourrelet du pneumatique, et inférieure à 150% de cette même largeur.

13. Ensemble roulant selon la revendication 12, **caractérisé en ce que** le renfort annulaire de siège (19) a une longueur axiale comprise entre 40 et 110% de la largeur du bourrelet du pneumatique.

14. Ensemble roulant selon la revendication 1, **caractérisé en ce que** le renfort annulaire de siège (19) a une épaisseur radiale moyenne supérieure ou égale à 0,3mm et inférieure ou égale à 20mm.

## Patentansprüche

1. Rollanordnung mit einer Drehachse, die Folgendes umfasst:
- einen Reifen mit zwei Wülsten (B),
- eine Felge (J),
- einen Adapter, der die Verbindung zwischen einem der Wülste und der Felge gewährleistet,
wobei die Felge zwei Felgensitze aufweist,
wobei der Adapter Folgendes aufweist:
- ein axial inneres Ende (10), das dazu ausgelegt ist, an dem Felgensitz montiert zu werden und ein inneres Verstärkungselement (16) umfasst,
- ein axial äußeres Ende (9), das ein äußeres Verstärkungselement (15) umfasst,
- einen Körper (11), der das äußere Ende mit dem inneren Ende derart verbindet, dass ein einteiliges Teil entsteht, und der mindestens eine Hauptverstärkungskonstruktion umfasst, die die Verbindung zwischen der äußeren Verstärkung und der inneren Verstärkung gewährleistet,
- einen im Wesentlichen zylindrischen Adaptersitz (18), der dazu bestimmt ist, einen der Wülste aufzunehmen, wobei sich der Sitz am axial äußeren Ende des Körpers befindet,
- eine Anlagefläche (21) des Adapters im Wesentlichen in einer Ebene senkrecht zur Drehachse, wobei sich die Anlagefläche auf der axial inneren Seite des axial äußeren Endes befindet,
**dadurch gekennzeichnet, dass** das Verstärkungselement (15) des axial äußeren Endes (9) vollständig axial außerhalb der Anlagefläche (21) liegt, dadurch, dass der Körper (11) gegenüber dem Adaptersitz (18) eine ringförmige Sitzverstärkung (19) umfasst, und dadurch, dass die Felge aus einem Material gebildet ist, das ausgewählt ist aus Aluminium- und/oder Magnesiumlegierungen, Verbundwerkstoffen auf Grundlage von Kohlenstofffasern, Glasfasern, Aramidfasern, Pflanzenfasern, wobei die Fasern in einer Matrix auf Basis von duroplastischen Verbindungen oder von thermoplastischen Verbindungen enthalten sind, oder aus einer komplexen Zusammensetzung, die ein Elastomer und einen Komplex auf Basis von Harz und Fasern umfasst, die ausgewählt sind aus Kohlenstofffasern, Glasfasern, Aramidfasern, Pflanzenfasern oder aus sämtlichen Kombinationen dieser Werkstoffe.

2. Rollanordnung nach Anspruch 1, **dadurch gekennzeichnet, dass** die Verbundwerkstoffe auf Faserbasis Fasern mit einer Länge von größer gleich 5 mm aufweisen.

3. Rollanordnung nach Anspruch 1, **dadurch gekennzeichnet, dass** die Matrix auf Basis von duroplastischen Verbindungen ausgewählt ist aus Epoxidharzen, Vinylester, ungesättigten Polyestern, Cyanatester, Bismaleimid, Acrylharzen, Phenolharzen, Polyurethanen und ihrer Kombination.

4. Rollanordnung nach Anspruch 1, **dadurch gekennzeichnet, dass** die Matrix auf Basis von thermoplastischen Verbindungen ausgewählt ist aus Polypropylen (PP), Polyethylen (PE), Polyamiden (PA), teilaromatischen Polyamiden, Polyester (PET), Polybutylenterephthalat (PBT), Polyetheretherketon (PEEK), Polyetherketonketon (PEKK), Polyethersulfon (PSU), Polyetherimid (PEI), Polyimid (PI), Polyamidimid (PAI), Polyphenylensulfid (PPS), Polyoxymethylen (POM), Polyphenylenoxid (PPO).

5. Rollanordnung nach Anspruch 1, **dadurch gekennzeichnet, dass** das Verstärkungselement (15) des axial äußeren Endes (9) radial außerhalb des Adaptersitzes (18) angeordnet ist.

6. Rollanordnung nach Anspruch 1, **dadurch gekennzeichnet, dass** die ringförmige Sitzverstärkung (19) einen Kompressionsmodul von größer gleich 1 GPa und vorzugsweise von mehr als 4 GPa und am bevorzugtesten von mehr als 10 GPa aufweist.

7. Rollanordnung nach Anspruch 1, **dadurch gekennzeichnet, dass** die ringförmige Sitzverstärkung (19) aus einem Kern gebildet ist, der von einem Elastomer umgeben ist.

8. Rollanordnung nach einem der Ansprüche 1 oder 7, **dadurch gekennzeichnet, dass** das Elastomer aus vernetzbaren Kautschuken, thermoplastischen Elastomeren, nicht thermoplastischen Elastomeren ausgewählt ist.

9. Rollanordnung nach Anspruch 7, **dadurch gekennzeichnet, dass** der Kern mindestens ein Element umfasst, das ausgewählt ist aus einem Metall, einem Verbundwerkstoff, einer thermoplastischen Verbindung und ihrer Mischung.

10. Rollanordnung nach einem der Ansprüche 1, 6 oder 7, **dadurch gekennzeichnet, dass** die ringförmige Sitzverstärkung (19) aus mindestens zwei Schichten aus unterschiedlichen Bestandteilen gebildet ist, die abwechselnd angeordnet sind.

11. Rollanordnung nach Anspruch 1, **dadurch gekennzeichnet, dass** der Verbundwerkstoff auf Glasfasern basiert, die in einem Harzwerkstoff eingebettet sind.

12. Rollanordnung nach Anspruch 1, **dadurch gekennzeichnet, dass** die ringförmige Sitzverstärkung (19) eine axiale Gesamtlänge von größer gleich 30% der Breite der Wulst des Reifens und kleiner als 150% dieser selben Breite aufweist.

13. Rollanordnung nach Anspruch 12, **dadurch gekennzeichnet, dass** die ringförmige Sitzverstärkung (19) eine axiale Länge zwischen 40 und 110% der Breite der Wulst des Reifens aufweist.

14. Rollanordnung nach Anspruch 1, **dadurch gekennzeichnet, dass** die ringförmige Sitzverstärkung (19) eine mittlere radiale Dicke von größer gleich 0,3 mm und kleiner gleich 20 mm aufweist.

## Claims

1. Rolling assembly having an axis of rotation and comprising:
- a tyre having two beads (B),
- a rim (J),
- an adapter providing the connection between one of the beads and the rim,
the said rim having two rim seats,
the said adapter having:
- an axially inner end (10) that is intended to be mounted on the rim seat and comprises an inner reinforcing element (16),
- an axially outer end (9) that comprises an outer reinforcing element (15),
- a body (11) that connects the said outer end to the said inner end so as to form a single piece and comprises at least one main reinforcement that provides the connection between the said outer reinforcer and the said inner reinforcer,
- a substantially cylindrical adapter seat (18) intended to receive one of the said beads, the said seat being situated at the axially outer end of the said body,
- an adapter bearing face (21) substantially contained in a plane perpendicular to the axis of rotation, the said bearing face being situated on the axially inner face of the axially outer end,
**characterized in that** the reinforcing element (15) of the axially outer end (9) is axially situated entirely on the outside of the bearing face (21), **in that** the body (11) comprises, facing the adapter seat (18), an annular seat reinforcement (19), **and in that** the rim is made of a material selected from alloys of aluminium and/or of magnesium, composite materials based on carbon fibres, glass fibres, aramid fibres, plant fibres, the said fibres being comprised in a matrix based on thermosetting compounds or on thermoplastic compounds, or of a complex composite containing an elastomer and a complex based on resin and on fibres selected from carbon fibres, glass fibres, aramid fibres, plant fibres or any combinations of these materials.

2. Rolling assembly according to Claim 1, **characterized in that** the fibre-based composite materials comprise fibres of a length greater than or equal to 5 mm.

3. Rolling assembly according to Claim 1, **characterized in that** the matrix based on thermosetting compounds is selected from epoxy resins, vinyl ester, unsaturated polyesters, cyanate ester, bismaleimide, acrylic resins, phenolic resins, polyurethanes and combinations thereof.

4. Rolling assembly according to Claim 1, **characterized in that** the matrix based on thermoplastic compounds is selected from polypropylene (PP), polyethylene (PE), polyamides (PAs), semiaromatic polyamides, polyester (PET), polybutylene terephthalate (PBT), polyetheretherketone (PEEK), polyetherketoneketone (PEKK), polyethersulphone (PSU), polyetherimide (PEI), polyimide (PI), polyamideimide (PAI), polyphenylenesulphide (PPS), polyoxymethylene (POM), polyphenylene oxide (PPO).

5. Rolling assembly according to Claim 1, **characterized in that** the reinforcing element **(15)** of the axially outer end (9) is positioned radially on the outside of the adapter seat (18).

6. Rolling assembly according to Claim 1, **characterized in that** the annular seat reinforcer (19) has a compression modulus greater than or equal to 1 GPa, and preferably greater than 4 GPa, and more preferably greater than 10 GPa.

7. Rolling assembly according to Claim 1, **characterized in that** the annular seat reinforcer (19) is made up of a core surrounded by an elastomer.

8. Rolling assembly according to either of Claims 1 and 7, **characterized in that** the elastomer is selected from crosslinkable rubbers, thermoplastic elastomers, non-thermoplastic elastomers.

9. Rolling assembly according to Claim 7, **characterized in that** the core comprises at least one element chosen from a metal, a composite material, a thermoplastic compound, and a mixture thereof.

10. Rolling assembly according to one of Claims 1, 6 and 7, **characterized in that** the annular seat reinforcer (19) is made up of at least two layers of different constituents positioned in alternation.

11. Rolling assembly according to Claim 1, **characterized in that** the composite material is based on glass fibres embedded in a resin material.

12. Rolling assembly according to Claim 1, **characterized in that** the annular seat reinforcer (19) has an overall axial length greater than or equal to 30% of the width of the bead of the tyre, and less than 150% of this same width.

13. Rolling assembly according to Claim 12, **characterized in that** the annular seat reinforcer (19) has an axial length of between 40 and 110% of the width of the bead of the tyre.

14. Rolling assembly according to Claim 1, **characterized in that** the annular seat reinforcer (19) has a mean radial thickness greater than or equal to 0.3 mm and less than or equal to 20 mm.
